**Europäisches Patentamt**

**European Patent Office**

**Office européen des brevets**

(11) Veröffentlichungsnummer: **0 016 325 B1**

(12) **EUROPÄISCHE PATENTSCHRIFT**

(45) Veröffentlichungstag der Patentschrift: 23.09.81

(51) Int. Cl.³: **B 64 D 47/00**

(21) Anmeldenummer: **80100554.7**

(22) Anmeldetag: **04.02.80**

(54) Vorrichtung zum Festlegen von Aussenlasten an Flugzeugen.

(30) Priorität: **24.03.79 DE 2911603**

(43) Veröffentlichungstag der Anmeldung:
**01.10.80 Patentblatt 80/20**

(45) Bekanntmachung des Hinweises auf die Patenterteilung:
**23.09.81 Patentblatt 81/38**

(84) Benannte Vertragsstaaten:
**FR GB**

(56) Entgegenhaltungen:
**DE-A-659 319**
**FR-A-1 131 173**
**FR-A-2 380 185**
**FR-A-2 392 876**
**GB-A-594 609**
**GB-A-1 556 386**
**US-A-3 128 071**
**US-A-4 133 569**

(73) Patentinhaber: **Messerschmitt-Bölkow-Blohm Gesellschaft mit beschränkter Haftung, Postfach 801109, D-8000 München 80 (DE)**

(72) Erfinder: **Uhle, Heiko, Dipl.-Ing., Schrenckweg 4, D-8011 Egmating (DE)**

BUNDESDRUCKEREI BERLIN

Vorrichtung zum Festlegen von Außenlasten an Flugzeugen

Die Erfindung betrifft eine Vorrichtung zum Festlegen von an Aufhängeorganen wie Ösen, Haken od. dgl. aufgehängten Außenlasten an Flugzeugen.

Vorrichtungen der genannten Art werden dazu benötigt, Außenlasten, die im Fluge freigesetzt werden, so am Flugzeug festzulegen, daß schädliche Wirkungen, wie etwa Pendeln während des Fluges, vermieden werden.

Hierzu wird üblicherweise die Last mit zwei in Flugrichtung hintereinander angeordneten Aufhängeösen versehen, mit denen die Last am Flugzeug aufgehängt wird. Um das Pendeln zu verhindern, werden nach einer verbreiteten Lösung vier Spannschrauben in Widerlagern auf die Last aufgedrückt. Verbunden mit dieser Lösung sind umständliche manuelle Betätigung am Boden, schlechte Zugänglichkeit und hoher Zeitbedarf sowie der ungünstige Luftwiderstand der Anordnung.

Eine Weiterbildung der bekannten Lösung ist in der DE-OS 2 804 856 beschrieben, die sich zum Ziel gesetzt hat, das Anbringen der Last zu vereinfachen.

Dort sind zwei Puffer kugelig an einem Arm gelagert. Jeder Arm ist gelenkig an einem Rahmen befestigt. Im Innern des Rahmens ist ein Mechanismus untergebracht, durch den zum Feststellen der Last gegen einen Zapfen der Arme gedrückt wird, so daß die Arme sich nach unten gegen die Last bewegen. Als Folge davon werden die Puffer auf die Last gedrückt und legen diese fest.

Die Vorrichtung bietet zwar gegenüber der herkömmlichen Art der Feststellung mittels Spannschrauben eine Vereinfachung in der Handhabung, da das unpräzise und umständliche Anziehen der Spannschrauben entfällt.

Nicht beseitigt wird aber der Nachteil, daß die Arme, Puffer usw. im Luftstrom nach der Freigabe verbleiben und sich damit ungünstig auf den Widerstand auswirken. Weiter steht zu befürchten, daß die Arme im Luftstrom frei pendeln und zu Beschädigungen an der Vorrichtung führen.

Ebenso gravierend ist, daß ein ganz erheblicher apparativer Aufwand mit vielen mechanisch bewegten Teilen betrieben wird, um die Handhabungsvereinfachung zu erreichen. So sind Gleitgestänge, Bolzen mit Führungen, Federn, Mehrfachgehäuse und vieles mehr erforderlich. Jedes Teil hat eine individuelle Formgebung, so daß insgesamt ein erheblicher Kostenaufwand zum Herstellen der Vorrichtung nötig ist.

Schließlich muß bei Lasten mit kleineren Außendurchmessern eine Zusatzeinrichtung vorgesehen sein, um ein sicheres Festlegen bewerkstelligen zu können.

Aufgabe der Erfindung ist es, eine Vorrichtung zu schaffen, welche einen einfachen Mechanismus aufweist und die eine einfache manuelle oder auch zentrale automatische Festlegung gestattet, ohne daß an den standardisierten Lastenösen der Außenlasten Änderungen durchgeführt werden müssen.

Diese Aufgabe ist dadurch gelöst, daß ein oder mehrere Paare von Stützarmen gelenkig an einer zwischen den Stützarmen angeordneten Hubeinrichtung befestigt sind, und daß zum Festlegen die Stützarme von der Hubeinrichtung gegen mit dem Flugzeug in fester Verbindung stehende Widerlager und die Außenlast spannbar sind.

Durch die Erfindung wird eine Vorrichtung geschaffen, die sich durch ein Minimum an mechanischen Teilen auszeichnet und an Bedienungs- und Wartungsaufwand nur geringste Anforderungen stellt. Die der vorüberströmenden Luft ausgesetzten Teile weisen nur sehr kleine Stirnflächen auf, wobei strömungsgünstige Formen der Stützarme weiter günstig zu Buche schlagen. Nach dem Freisetzen der Last werden die Stützarme in das Gehäuse eingezogen, so daß für den weiteren Flug der durch die Vorrichtung erzeugte Luftwiderstand minimal wird. Ohne zusätzliche Maßnahmen können Lasten mit sehr kleinem Durchmesser bis zu Unendlich festgelegt werden. Die Vorrichtung eignet sich gleichermaßen für die Verwendung in Hochleistungsflugzeugen als auch in langsam fliegenden Hubschraubern.

Die Erfindung ist anhand eines in den Figuren dargestellten Ausführungsbeispiels näher erläutert. Es zeigt

Fig. 1 eine mittels der Vorrichtung festgelegte Außenlast,

Fig. 2 halb zurückgezogene Stützarme bei freigegebener Außenlast,

Fig. 3 automatisch einziehbare Stützarme.

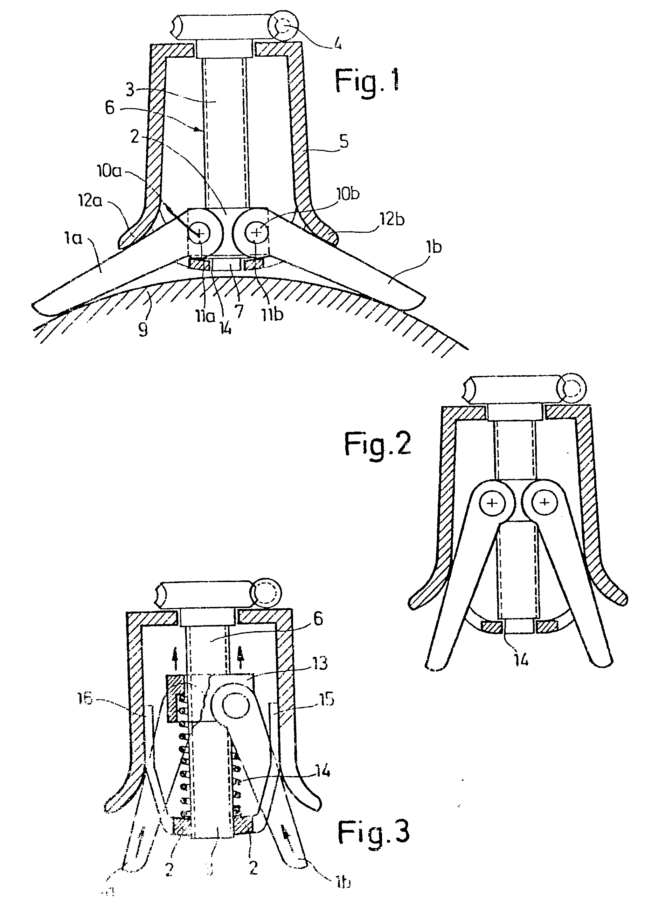

Gemäß Fig. 1 besteht die Vorrichtung im wesentlichen aus einem Paar Stützarmen 1a, 1b, einer Hubeinrichtung 6, die sich aus einer Mutter 2 mit Spindel 3 zusammensetzt, einem Gehäuse 5 und einem Schneckentrieb 4. Das Aufhängen der Außenlast geschieht in bekannter Weise an nicht näher dargestellten Ösen, Haken od. dgl. Die Spindel 3 wird an ihrem unteren Ende in einer Bohrung 14 im Gehäuse 5 geführt.

Die Stützarme 1a, 1b sind an der Mutter 2 gelenkig angebracht. Hierzu dienen z. B. Zapfen 10a, 10b an der Mutter 2, auf welche die Stützarme 1a, 1b mit Bohrungen 11a, 11b aufgezogen sind. Die Stützarme 1a, 1b können jeweils am oberen Ende gegabelt auf den Zapfen 10a, 10b der Mutter 2 gelagert sein (s. a. Fig. 3), so daß sich eine symmetrische Belastung der Mutter 2 ergibt. Das Gehäuse 5 dient sowohl zur Darstellung von Widerlagern 12a, 12b als auch zur Aufnahme der Hubeinrichtung 6 und des Schneckentriebs 4. Das Gehäuse 5 selbst kann integrales Bestandteil des nicht dargestellten Flugzeuges sein. Das Gehäuse 5 kann eine beliebige Form erhalten, lediglich im Bereich der Widerlager 12a, 12b muß eine entsprechende ebene Ausformung erfolgen.

Zum Festlegen der Außenlast 9 wird zunächst die Mutter 2 an das untere Ende der Spindel 3 bewegt. Die Stützarme 1a, 1b hängen lose herunter oder werden durch Federkraft ausgespreizt. Eine Außenlast 9 wird mit ihrer Öse an den nicht dargestellten Haken gehängt, hierbei werden die Stützarme nach oben und auseinandergedrückt. Durch Hochziehen der Mutter 2 mittels der Spindel 3 werden die Stützarme 1a, 1b geringfügig in das Gehäuse 5 hineingezogen und gegen die Widerlager 12a, 12b sowie die Außenlast 9 gespannt, so daß diese am Flugzeug festliegt.

Die Betätigung der Hubeinrichtung 6 kann in manueller Weise geschehen. Die Vorrichtung eignet sich aber auch besonders gut für automatische Betätigung, sei es, daß der Schneckentrieb 4 mittels Elektromotor betrieben wird, oder auch, daß die Hubeinrichtung 6 als hydraulische oder pneumatische Einrichtung ausgebildet ist. Im letzteren Fall werden z. B. — in nicht dargestellter Weise — die Stützarme 1a, 1b an einer Kolbenstange eines entsprechenden Betätigungszylinders angelenkt. In jedem Fall ist es von Vorteil, die Hubeinrichtung 6 selbsthemmend auszulegen.

Fig. 2 zeigt die Stützarme 1a, 1b in einer Zwischenstellung während des Einfahrens nach Freigabe der Außenlast 9. Das Freigeben erfolgt in bekannter Weise durch Ausschwenken von Lasthaken, pyrotechnische Trennung o. ä. und ist nicht Bestandteil der Erfindung.

Bei angehängter Außenlast 9 bieten die im Luftstrom verbleibenden Teile der Stützarme eine geringe Stirnfläche. Durch strömungsgünstige Formgebung kann eine weitere Reduzierung des Luftwiderstandes erreicht werden. Nach Freisetzen der Last werden die Stützarme völlig in das mit der Flugzeugaußenhaut abschließende Gehäuse 5 eingezogen. Die Stützarme 1a, 1b werden dazu in der gleichen Richtung weiterbewegt wie zunächst zum Verspannen bei angehängter Außenlast 9.

Gemäß Fig. 3 werden die Stützarme 1a, 1b nicht an der Mutter 2, sondern an einem davon getrennten Träger 13, z. B. einer Muffe, gelenkig befestigt. Der Träger 13 ist über der Spindel 3 der Hubeinrichtung 6 verschiebbar. Zwischen Träger 13 und Mutter 2 ist eine Feder 14 angeordnet. Durch diese einfache Maßnahme ist z. B. bei am Boden von Hand betätigter Vorrichtung ein automatisches Einführen der Stützarme 1a, 1b in das Gehäuse 5 nach der Freigabe der Last 9 im Fluge gewährleistet. Zum Anhängen der Außenlast 9 werden die Stützarme 1a, 1b gegen die Federkraft 14 aus dem Gehäuse 5 herausgezogen, so daß nach der Freigabe der Außenlast 9, d. h. nach Wegfall der Reaktionskräfte der Last 9 auf die Stützarme 1a, 1b, die gespannte Feder 14 die Muffe 13 mit den Stützarmen 1a, 1b automatisch in das Gehäuse 5 einschiebt.

In allen Fällen kann ein Verdrehen der Stützarme 1a, 1b durch entsprechende Formgebung des Gehäuses 5 verhindert werden, z. B.

indem Führungen 15, 16 vorgesehen sind.

Im Einzelfall kann die Richtung der Spannbewegung auch umgekehrt werden, d. h. daß die Stützarme 1a, 1b nicht in Richtung Einfahren in das Gehäuse 5, sondern entgegengesetzt betätigt werden. Das kann z. B. bei Lasten mit sehr kleinen Durchmessern im Verhältnis zur Spreizbarkeit der Stützarme 1a, 1b, oder aber bei Lasten mit ebener Oberfläche sinnvoll sein, die nur gegen vertikale Belastung festgelegt werden müssen.

**Patentansprüche**

1. Vorrichtung zum Festlegen von an Aufhängeorganen, wie an Haken, Ösen od. dgl. aufgehängten Außenlasten an Flugzeugen, dadurch gekennzeichnet, daß ein oder mehrere Paare von Stützarmen (1a, 1b) gelenkig an einer zwischen den Stützarmen (1a, 1b) angeordneten Hubeinrichtung (6) befestigt sind, und daß zum Festlegen die Stützarme (1a, 1b) von der Hubeinrichtung (6) gegen mit dem Flugzeug in fester Verbindung stehende Widerlager (12a, 12b) und die Außenlast (9) spannbar sind.

2. Vorrichtung nach Anspruch 1, dadurch gekennzeichnet, daß die Stützarme (1a, 1b) nach der Freigabe der Außenlast (9) durch Weiterbetätigen der Hubeinrichtung (6) in ein Gehäuse (5) einziehbar sind.

3. Vorrichtung nach Anspruch 1, dadurch gekennzeichnet, daß die Stützarme (1a, 1b) an einem auf der Hubeinrichtung verschiebbar angeordneten Träger (13) gelenkig befestigt sind, und daß nach der Freigabe der Außenlast (9) der Träger (13) mittels Feder (14) in das Gehäuse (5) einschiebbar ist.

4. Vorrichtung nach Anspruch 2 oder Anspruch 3, dadurch gekennzeichnet, daß die Widerlager (12a, 12b) Bestandteil des Gehäuses (5) sind.

5. Vorrichtung nach einem der vorhergehenden Ansprüche, dadurch gekennzeichnet, daß die Hubeinrichtung (6) aus Spindel (3) und Mutter (2) besteht.

6. Vorrichtung nach Anspruch 5, dadurch gekennzeichnet, daß die Spindel (3) mittels Schneckentrieb (4) drehbar ist.

7. Vorrichtung nach Anspruch 1 oder 2, dadurch gekennzeichnet, daß die Hubeinrichtung (6) hydraulisch oder pneumatisch betätigbar ist.

**Claims**

1. Fixture for securing to aircraft outboard loads suspended from suspension members such as hooks, lugs or similar, characterized in that one or more pairs of supporting arms (1a, 1b) is or are fastened in articulated fashion to a lifting facility (6) located between the supporting arms (1a, 1b), and in that, for securing the outboard load, the supporting arms (1a, 1b) can be clamped by the lifting facility (6) against the outboard load (9) and against counter-supports (12a, 12b) connected permanently to the aircraft.

2. Fixture as defined in Claim 1, characterized in that, after the outboard load (9) has been released, the supporting arms (1a, 1b) can be retracted into a housing (5) by the re-actuation of the lifting facility (6).

3. Fixture as defined in Claim 1, characterized in that the supporting arms (1a, 1b) are fastened in articulated fashion to a carrier (13) located movably on the lifting facility, and in that, after the outboard load (9) has been released, the carrier (13) can be retracted into the housing (5) by means of spring (14).

4. Fixture as defined in Claim 2 or Claim 3, characterized in that the counter-supports (12a, 12b) form an integral part of the housing (5).

5. Fixture as defined in one of the preceding Claims, characterized in that the lifting facility (6) comprises spindle (3) and nut (2).

6. Fixture as defined in Claim 5, characterized in that the spindle (3) can be turned by means of worm drive (4).

7. Fixture as defined in Claim 1 or Claim 2, characterized in that the lifting facility (6) can be actuated by hydraulic or pneumatic means.

**Revendications**

1. Dispositif pour immobiliser des charges suspendues à l'extérieur d'avions à l'aide d'attaches telles que des crochets, oeillères ou autre, caractérisé en ce qu'une ou plusieurs paire de béquilles d'appui (1a, 1b) sont fixées par une articulation à un dispositif de relevage (6) situé entre les béquilles (1a, 1b), et que pour réaliser l'immobilisation, les béquilles (1a, 1b) peuvent être serrées par le dispositif de relevage (6) d'une part contre des appuis solidaires de l'avion, d'autre part contre la charge.

2. Dispositif selon la revendication 1, caractérisé en ce que les béquilles (1a, 1b) sont rétractables dans un boîtier (5) après le largage de la charge (9) si l'on continue d'actionner le dispositif de relevage (6).

3. Dispositif selon la revendication 1, caractérisé en ce que les béquilles (1a, 1b) sont fixées par une articulation sur un support (13) pouvant coulisser sur le dispositif de relevage et que le support (13) est rétractable dans le boîtier (5) sous l'action d'un ressort (14) après largage de la charge (9).

4. Dispositif selon l'une des revendications 2 ou 3, caractérisé en ce que les appuis (12a, 12b) sont intégrés au boîtier (5).

5. Dispositif selon l'une des revendications ci-dessus, caractérisé en ce que le dispositif de relevage (6) est composé d'une tige filetée (3) et d'un écrou (2).

6. Dispositif selon l'une des revendications ci-dessus, caractérisé en ce que la tige filetée (3) est actionnée en rotation par un engrenage à vis sans fin (4).

7. Dispositif selon l'une des revendications 1 ou 2, caractérisé en ce que le dispositif de relevage (6) peut être actionné pneumatiquement ou hydrauliquement.

Fig.1

Fig.2

Fig.3